(19) Europäisches Patentamt
European Patent Office
Office européen des brevets

(11) **EP 0 998 160 B1**

(12) **EUROPEAN PATENT SPECIFICATION**

(45) Date of publication and mention
of the grant of the patent:
**28.05.2008 Bulletin 2008/22**

(21) Application number: **96929520.3**

(22) Date of filing: **04.09.1996**

(51) Int Cl.:
*H04Q 9/00* (2006.01)          *H04L 1/00* (2006.01)
*B61L 23/16* (2006.01)

(86) International application number:
**PCT/JP1996/002502**

(87) International publication number:
**WO 1998/010618 (12.03.1998 Gazette 1998/10)**

(54) **METHOD AND SYSTEM FOR TRANSMITTING RAILROAD INFORMATION**

VERFAHREN UND ANLAGE ZUR ÜBERTRAGUNG VON EISENBAHNINFORMATIONEN

PROCEDE ET SYSTEME DE TRANSMISSION D'INFORMATIONS D'ETAT DE VOIE FERREE

(84) Designated Contracting States:
**DE FR GB IT SE**

(43) Date of publication of application:
**03.05.2000 Bulletin 2000/18**

(73) Proprietor: **Hitachi, Ltd.**
**Chiyoda-ku,**
**Tokyo 101 (JP)**

(72) Inventors:
 • **OGUMA, Kenji**
  **Ibaraki 316 (JP)**
 • **KAWABATA, Atsushi**
  **Ibaraki 319-12 (JP)**

 • **TASHIRO, Korefumi**
  **Ibaraki 319-12 (JP)**
 • **FUJIWARA, Michio**
  **Ibaraki 312 (JP)**
 • **TANIFUJI, Shinya**
  **Ibaraki 316 (JP)**

(74) Representative: **Strehl Schübel-Hopf & Partner**
**Maximilianstrasse 54**
**80538 München (DE)**

(56) References cited:
EP-A- 0 552 861          JP-A- 2 042 837
JP-A- 3 128 760          JP-A- 5 064 264
JP-A- 59 083 429         JP-U- 3 090 548
US-A- 4 456 997          US-A- 5 420 883

**Description**

Technical Field:

The present invention relates to a railway information transmission method and system for readily sensing the trouble of a transmission path in a railway information transmission system wherein information is transmitted between an equipment on the ground and a train by a consecutive transmission mode.

Background Art:

The transmission modes of a railway system between an on-vehicle control equipment on a train and a control equipment on the ground include a consecutive transmission mode and a point transmission mode. With the consecutive transmission mode of them, the same information is repeatedly transmitted at predetermined time intervals, thereby to ensure the reliability of the information transmission for the reason, for example, that the trouble of the equipment can be detected from the interruption of the transmission information.

A train control based on the consecutive transmission mode as is used at present is, for example, an automatic train control system (ATC system). In the system, a method for giving the speed limit of each section on a track is a control method based on analog information transmission wherein speed limit information is transferred by transmitting and receiving the signal of a frequency correspondent to the speed limit.

In contrast, disclosed in the official gazette of Japanese Patent Application JP-A-3 128 760 by way of example is a digital information transmission method wherein information is transferred in such a way that a signal wave obtained by modulating speed limit information etc. as digital information is transmitted from the ground control equipment, and that the transmitted signal wave is received and demodulated by the on-vehicle control equipment.

Besides, in general, in transmitting digital information, a method for detecting the error of information in the case where the content of the information has been destroyed by a bit error is so performed that an equipment on the transmission side of the information transmits the information by affixing thereto a redundant code for the error detection, such as CRC (cyclic redundancy check) code, and that an equipment having received the transmitted information checks the contents of the error detecting code and the information so as to avoid using any erroneous information for processing. Such a method is disclosed in JP-A-5 064 264.

Regarding a method for affixing such a redundant code, the official gazette of Japanese Patent Application Laid-open No. 1364725/1988, for example, discloses a redundant code processing method wherein a transmission equipment forms a matrix by the use of information to-be-communicated and creates redundant codes in the row and column directions of the matrix, and it transmits the resulting information, and wherein a reception equipment similarly forms a matrix and creates redundant codes in the row and column directions of the matrix as to received information, and it collates the created redundant codes with received ones, so as to detect and correct the error of the received information.

In the train control, for example, in a system for performing a safety control, such as the automatic train control system (ATC system), it is required that the ground equipment should stop the output of information to the train in case of the trouble thereof and that it should allow the train to judge the trouble of the ground equipment or should transfer the occurrence of the trouble to the train, lest the train should spoil safety on account of the repeated transmissions of the same information attributed to the trouble of the ground equipment. In order to satisfy the requirement, the ground equipment adopts devices of higher reliabilities with respect to the whole system. For this reason, the ground equipment becomes a complicated construction and is expensive.

As one method for curtailing the cost of the railway system, it is considered to endow the ground equipment with a simple processing architecture. However, in a case where the processing in which the information is repeatedly sent while being updated, as in the consecutive transmission mode, is executed by the use of such an equipment, any trouble might occur to bring about a state where information transmitted before is subjected to the transmission processing in a proper transmission procedure as if it were new information.

On such an occasion, since error detection means for the CRC code or the like is an expedient for detecting the bit error of the information to-be-communicated, any checking method based on the CRC code or the like cannot find the trouble of the equipment unless the information transmitted before undergoes the bit error.

An object of the present invention is to realize the simple finding of the trouble of a transmission path and further to enhance the safety of train service based on the automatic train control or the like, in a railway information transmission method and system wherein information is transmitted between a control equipment on a train and a control equipment on the ground by the consecutive transmission mode.

Information transmission methods and systems employing the use of sequence information with the information to be transmitted are disclosed in JP-A-2 042 837 and JP-A-59 083 429.

Disclosure of Invention:

The present invention consists, in a technique wherein information is transmitted by a consecutive transmission mode between an on-vehicle control equipment for a train running on a track and a ground control equipment for administering the run of the train, in that a redundant code which is updated in a predetermined procedure every transmission processing is affixed to information to-be-communicated, the information being then transmitted, and that the redundant code which is contained in the received information is collated with a redundant code which is created on a reception side and which is updated in a predetermined procedure.

Further, in a case where the collation of the redundant codes results in disagreement, the result of the collation is reported to the reception side, or it is outputted as a signal so as to transmit the signal to means for coping with the emergency of the train.

Brief Description of Drawings:

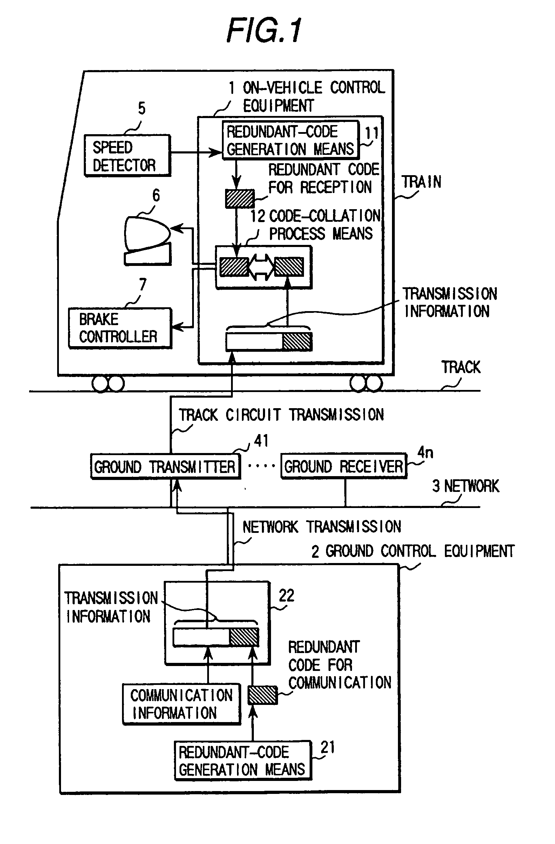

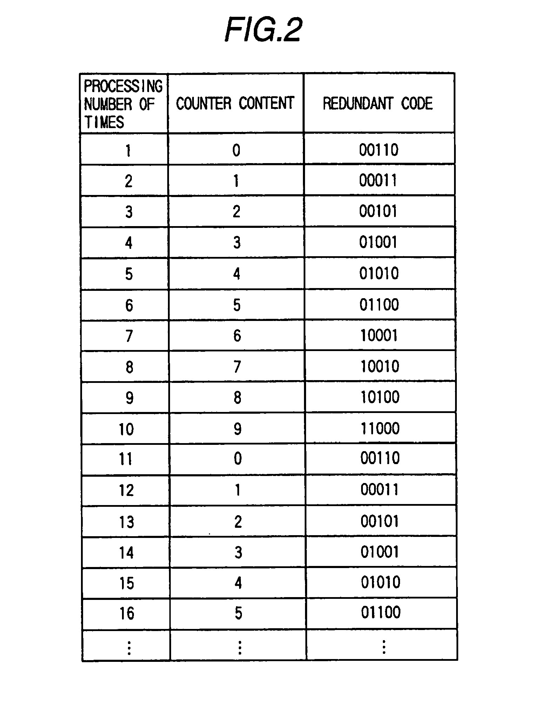

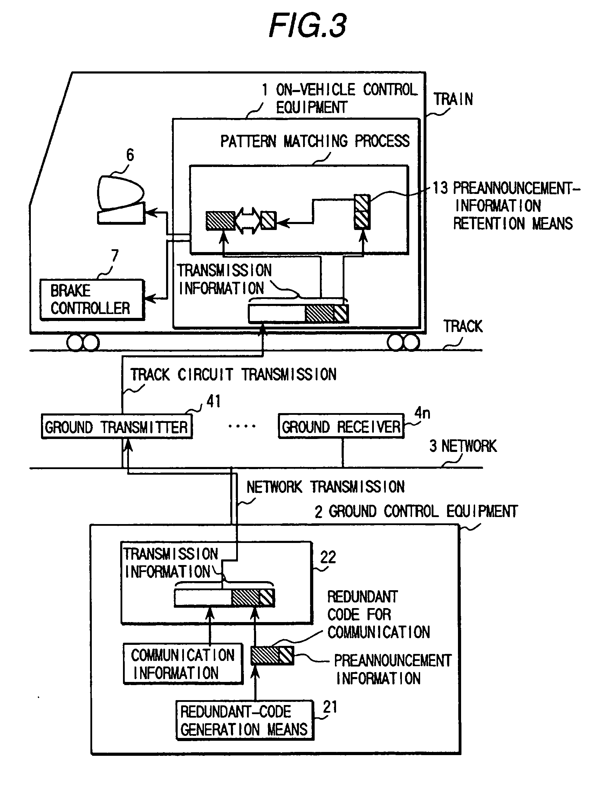

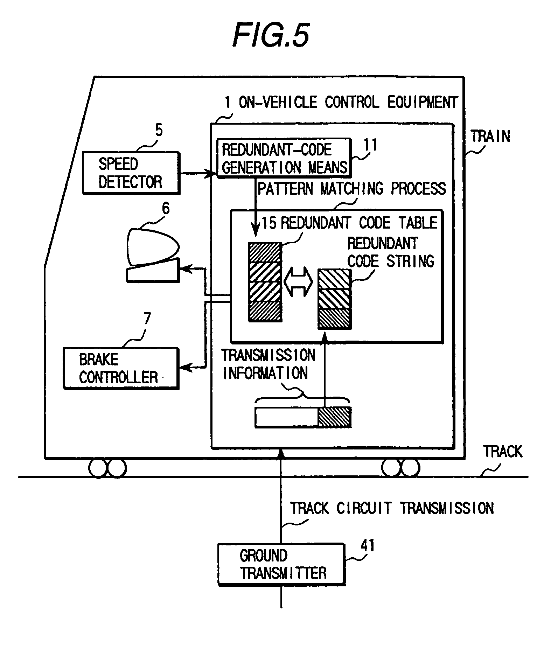

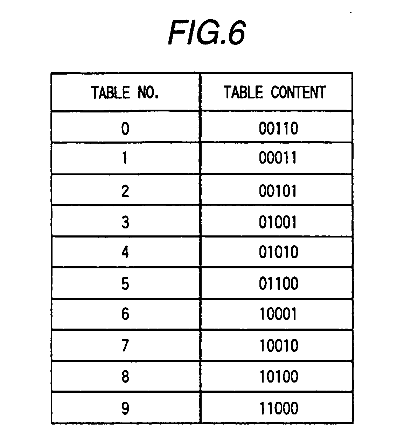

Fig. 1 is a block diagram relevant to transmissions, showing an embodiment of the present invention. Fig. 2 is a diagram for use in elucidating the processing contents of redundant-code generation means depicted in Fig. 1. Figs. 3, 4 and 5 are block diagrams of information transmission systems, each showing another embodiment of the present invention Fig. 6 is a detailed diagram of a redundant code table included in the embodiment of Fig. 5.

Best Modes for Carrying Out the Invention:

Now, an embodiment of the present invention will be described as to an example of application to the transmission system of an automatic train control system (ATC system) in a railway. Fig. 1 illustrates a block diagram relevant to transmission processing in the case where information is transmitted from a ground control equipment to an on-vehicle control equipment.

The on-vehicle control equipment 1 for controlling a train is installed on the train which runs on a track, while the ground control equipment 2 for administering the run of the train is installed on the ground. In the information transmission between both the equipments, information is transmitted to a track circuit by a consecutive transmission mode through a plurality of ground transmitters/receivers 41 - 4n which are coupled with the ground control equipment 2 by a network 3.

Connected to the on-vehicle control equipment 1 are a speed detector 5 for detecting the speed of the train, a display unit 6, and a brake controller 7. The on-vehicle control equipment 1 includes therein redundant-code generation means 11 for generating a redundant code for reception as is updated in accordance with a predetermined procedure upon receiving the output of the speed detector 5, and code-collation process means 12 for collating the receiving redundant code with a redundant code for communication as is affixed to transmission information transmitted from the ground control equipment 2, the signal of the means 12 being outputted to the display unit 6 or the brake controller 7 in correspondence with the result of the collation.

On the other hand, the ground control equipment 2 includes therein redundant-code generation means 21 for generating the communicating redundant code as is updated in accordance with a predetermined procedure, and means 22 for affixing the communicating redundant code which is updated each time information generated by the redundant-code generation means 21 is transmitted, to communication information so as to form transmission information, the transmission information being subjected to the network transmission to the plurality of ground transmitters/receivers 41 - 4n which are connected to the network 3.

Next, the processing contents of the redundant-code generation means 11, 21 will be described with reference to Fig. 2. Each of these means includes therein a counter whose operation recurs every tenth count, and whose content is updated each time the processing number of times is renewed. Since the redundant code is generated by expressing each of the numerical values 0 - 9 of the counter in terms of a "2-out-of-5" code (the mode in which "1's" are contained in 5 bits without fail), it is also updated every processing number of times in a pattern as shown in the figure.

Incidentally, the redundant-code generation means 11 carried on the vehicle senses the stop of the train at, e. g., a station from the output of the speed detector 5, and it initializes or updates the counters included in the redundant-code generation means on the vehicle and on the ground, on the basis of the sensed stop.

Next, transmission operations in this embodiment will be described. By the way, in this embodiment, a CRC code which is used in error detection based on a bit error arising in the course of transmission shall be affixed also to the communication information to-be-transmitted.

Initially, since the content of the first communicating redundant code to be transmitted from the ground side is {00110} corresponding to "0" of the counter, the transmission information becomes as follows:

```
Transmission information = {Communication
  information} + {00110} + {CRC code}
```

The transmission information is sent from the ground control equipment through the network to the ground transmitters/receivers, which transfer the transmission information to the on-vehicle control equipment by the track circuit transmission.

The on-vehicle control equipment first checks the received transmission information on the basis of the CRC code. Subsequently, it collates the redundant codes so as to confirm that the information to be communicated is correct data. In this way, the occurrence of any bit error in the transmission information during the transmission can be first checked by making the check based on the CRC code.

Since the communicating redundant code contained in the transmission information is subsequently collated with the receiving redundant code held in the on-vehicle control equipment, it can be confirmed every transmission that the transmission information is the very information transmitted by the ground control equipment.

By way of example, the redundant code which the on-vehicle control equipment first receives from the ground side has the content {00110} of the communicating redundant code created in the ground control equipment.

On the other hand, the receiving redundant code is created in the on-vehicle control equipment every reception, and the content thereof is {00110} corresponding to "0" of the counter.

Thus, the contents of the communicating redundant code and the receiving redundant code agree, and it can be confirmed that the transmission is correct.

In the next transmission, the value of the counter included in the ground control equipment is updated to "1", and hence, the content of the communicating redundant code is updated to {00011}. In consequence, also the content of the redundant code in the transmission information becomes {00011}.

Besides, the content of the redundant code in the on-vehicle control equipment is also updated in correspondence with the value of the counter to become {00011}. As a result, the communicating redundant code and receiving redundant code in the collation come into agreement, and it can therefore be confirmed that the transmission is correct.

Meanwhile, in a case where either or both of the ground transmitter/receiver and the network has/have developed a trouble/troubles, the transmission information is not correctly transferred. There will be described a method for finding the trouble of the ground transmitter/receiver as well as the network in this case.

First, let's consider an occasion where the ground transmitter/receiver or the network has developed the trouble and does not transmit information. On this occasion, the transmission of the information becomes impossible, and hence, the trouble can be found from the fact that the period of time for which the on-vehicle control equipment does not receive the transmission information is, at least, a predetermined duration.

Next, let's consider an occasion where the ground transmitter/receiver has developed the trouble and repeatedly transmits the transmission information transmitted before. On the occasion where the trouble has occurred after the transmission of the transmission information corresponding to the content "1" of each counter, the content of the communicating redundant code remains unchanged at {00110} corresponding to the counter content "1". On the other hand, the counter in the on-vehicle control equipment is updated at the time of the reception processing, so that the content of the receiving redundant code becomes {00101} corresponding to "2" which is the updated value of the counter. In the transmission information succeeding the occurrence of the trouble, the information items in the on-vehicle control equipment become as follows:

```
Transmission information = {Communication
  information} + {00011} + {CRC code}
```

```
Receiving redundant code = {00101}
```

Herein, the check based on the CRC code serves to heck only the presence of any bit error in the transmission information, so that the presence or absence of any trouble cannot be detected. Since, however, the redundant codes which are updated every transmission are employed in the collation thereof, the updated states of the respective transmission information items can be checked. In consequence of the collation, it is grasped that the content of the redundant code contained in the transmission information disagrees with the content of the redundant code held in the on-vehicle control equipment. Accordingly, it is grasped that the received transmission information is not the information correctly transmitted from the ground control equipment, and it can be discerned that the trouble(s) has/have occurred in either or both of the network and the ground transmitter/receiver which constitute a midway transmission path.

Thus, there has been described the method which uses the redundant codes to discriminate that the transmission information sent in is the information correctly transmitted.

On the occasion where the transmission information is not the information correctly transmitted, the on-vehicle control equipment falls into the state in which it cannot obtain data that are to be obtained in the form of the transmission information from the ground control equipment. If the train runs with the above state left intact, the safety thereof cannot be ensured for such a reason that a distance to a preceding train existent in the traveling direction of the pertinent train is not known. Therefore, on condition that the above state continues for, at least, a predetermined duration, the on-vehicle control equipment executes such processing for keeping the pertinent train in a safe state, as displaying the occurrence of the trouble in the transmission path, on the display unit mounted in the cab of the train, thereby to report the situation to the driver of the train, or as giving a braking command to means for coping with the emergency of the train (for example, the brake controller), thereby to stop the train.

Next, there will be stated a case where information items are transmitted from the ground control equipment to the on-vehicle control equipments of a plurality of trains.

The ground control equipment creates communication information items for the plurality of trains, for example, respective trains #1 and #2, and it transmits transmission information items which bear train Nos., redundant codes and CRC codes corresponding to the communication information items, to the respective trains #1 and #2.

Thus far, there have been stated the cases where the information is transmitted from the ground control equipment to the on-vehicle control equipment. In a case where information is transmitted conversely from the on-vehicle control equipment to the ground control equipment, merely the direction of the transmission as shown in Fig. 1 changes, and the construction is not basically different.

In this case, however, the code collation process means is disposed in the ground control equipment. Herein, the ground side is furnished with means for operating when the state in which the collation with the redundant code received from the on-vehicle control equipment results in disagreement continues for, at least, a predetermined duration, so as to execute such processing for keeping the train in a safe state, as displaying the occurrence of the trouble in the transmission path, on a display unit mounted in the ground control equipment, thereby to report the situation to the operator of the ground control equipment, or as giving a command to means for coping with the emergency of the train (for example, giving stop indications to signal apparatuses installed within the control range of the ground control equipment), thereby to stop the train.

Next, there will be explained the initializations of the redundant codes in the on-vehicle control equipment and the ground control equipment. In order to normally transmit information between on the vehicle and on the ground, the contents of the counters held within the redundant-code generation means in the on-vehicle control equipment and the ground control equipment need to be in agreement. A process for the initializations is therefore executed by bringing the counters in both the code generation means into the agreeing contents before the transmission is started between both the control equipments.

Incidentally, during the process for the agreeing counter contents, the code collation process for the transmission information cannot be executed, and the safety of the train might be spoilt. As a condition for the execution of the process for the agreeing counter contents, therefore, it is necessary to confirm that the train is in a safe state. To this end, the process for the agreeing contents of both the counters is carried out after the stop of the train complying with the stop indication of a station, a signal apparatus, or the like has been confirmed by detecting the speed of the train. Besides, in a case where both the counters are forcibly brought into the agreeing contents, the process is carried out after the train has been stopped by sending a command for a stop indication to the signal apparatus from the ground control equipment.

Fig. 3 is a block diagram of an information transmission system, showing another embodiment of the present invention. The point of difference from Fig. 1 is that, in affixing a redundant code to transmission information, a ground control equipment affixes as preannouncement information, part of a redundant code which is to be affixed to transmission information at the next transmission timing, and it creates a CRC code for the information bearing also the preannouncement information, so as to transmit the resulting information to an on-vehicle control equipment as the transmission information.

The structure of the transmission information based on this contrivance becomes as follows:

```
Transmission information = {Communication
information} + {Redundant code} + {Preannouncement
information} + {CRC code}
```

By way of example, let's consider a case where the counter of redundant-code generation means 21 included in the ground control equipment has a count "1". At this time, the content of the redundant code is {00011}. Since the counter is updated to "2" at the next transmission timing, the content of the redundant code at that time becomes {00101}. Assuming that the content of the preannouncement information be the whole redundant code of the next transmission timing, the preannouncement information for the counter content "1" becomes {00101} corresponding to the counter content "2", and the transmission information becomes as follows:

Transmission information = {Communication information} + {00011} + {00101} + {CRC code}

The on-vehicle control equipment retains the preannouncement information contained in the received transmission information, by preannouncement-information retention means 13. Accordingly, the content of the preannouncement-information retention means is as follows:

Preannouncement-information retention means = {00101}

At the next transmission timing, the content of the counter is updated to "2", and hence, the preannouncement information becomes {01001} corresponding to a counter content "3". Therefore, the transmission information becomes as follows:

Transmission information = {Communication information} + {00101} + {01001} + {CRC code}

In the on-vehicle control equipment, the redundant code contained in the received transmission information is collated with the content of the preannouncement-information retention means. At this time, the content of the redundant code is {00101}, and that of the preannouncement-information retention means is {00101}. As a result, both the contents are in agreement, and it can therefore be confirmed that the current transmission information is information correctly updated with respect to the last transmission information.

Now, let's consider a case where either or both of a network and a ground transmitter/receiver has/have developed a trouble/troubles, and where the transmission information sent at the last transmission timing is repeatedly transmitted. When the transmission information corresponding to the counter content "1" is repeated without sending the transmission information with the value of the counter updated to "2", the transmission information which the on-vehicle control equipment receives is as follows:

Transmission information = {Communication information} + {00011} + {00101} + {CRC code}

The content of the redundant code at this time is {00011}, and that of the preannouncement-information retention means is {00101}. In this manner, the collation between the content of the preannouncement-information retention means and the redundant code contained in the transmission information results in disagreement. It can consequently be found that the transmission information is not one correctly sent.

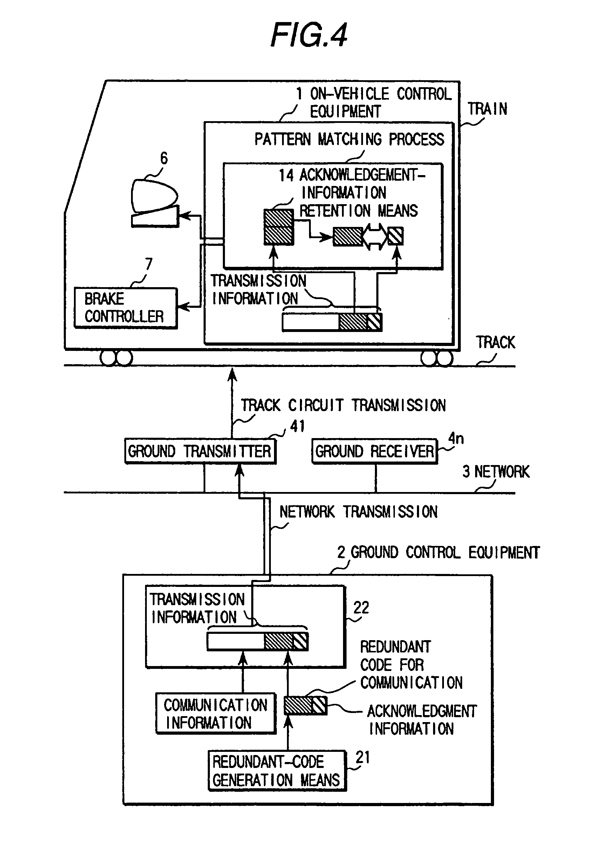

Fig. 4 is a block diagram of an information transmission system, showing another embodiment of the present invention. The point of difference from Fig. 1 is that, in affixing a redundant code to transmission information, a ground control equipment affixes as acknowledgement information, part of a redundant code which was affixed to transmission information at the last transmission timing, and it creates a CRC code for the information bearing also the acknowledgement information, so as to transmit the resulting information to an on-vehicle control equipment as the transmission information.

Thus, the structure of the transmission information becomes as follows:

$$\text{Transmission information} = \{\text{Communication information}\} + \{\text{Redundant code}\} + \{\text{Acknowledgement information}\} + \{\text{CRC code}\}$$

By way of example, let's consider a case where the counter of redundant-code generation means included in the ground control equipment has a count "3". At this time, the content of the redundant code is {01001}. Since the counter had a count "2" at the last transmission timing, the content of the redundant code at that time became {00101}. Assuming that the content of the acknowledgement information be the whole redundant code of the last transmission timing, the acknowledgement information for the counter content "3" becomes {00101} corresponding to the counter content "2", and the transmission information becomes as follows:

$$\text{Transmission information} = \{\text{Communication information}\} + \{01001\} + \{00101\} + \{\text{CRC code}\}$$

The on-vehicle control equipment retains the redundant code contained in the received transmission information, by acknowledgement-information retention means 14. Accordingly, the content of the acknowledgement-information retention means is as follows:

$$\text{Acknowledgement-information retention means} = \{01001\}$$

At the next transmission timing, the content of the counter is updated to "4", and hence, the acknowledgement information becomes {01001} corresponding to the counter content "3". Therefore, the transmission information becomes as follows:

$$\text{Transmission information} = \{\text{Communication information}\} + \{01010\} + \{01001\} + \{\text{CRC code}\}$$

Here, the on-vehicle processing equipment collates the acknowledgement information contained in the received transmission information and the content of the acknowledgement-information retention means. The content of the acknowledgement information is {01001}, and that of the acknowledgement-information retention means is {01001}. As a result, both the contents are in agreement, and it can therefore be confirmed that the last transmission information was information correctly updated with respect to the current transmission information.

Now, let's consider a case where either or both of a network and a ground transmitter/receiver has/have developed a trouble/troubles, and where the transmission information sent at the last transmission timing is repeatedly transmitted. When the transmission information corresponding to the counter content "3" is repeated without sending the transmission information with the value of the counter updated to "4", the transmission information which the on-vehicle control equipment receives is as follows:

$$\text{Transmission information} = \{\text{Communication information}\} + \{01001\} + \{00101\} + \{\text{CRC code}\}$$

The content of the acknowledgement information at this time is {00101}, whereas the content of the acknowledgement-information retention means is {01001}. In this manner, the collation between the content of the acknowledgement-information retention means and the redundant code contained in the transmission information results in disagreement. It can consequently be found that the updated state of the transmission information is not correct.

Fig. 5 is a block diagram of an information transmission system, showing another embodiment of the present invention. The contrivance of the embodiment accomplishes the same object as in the embodiment of Fig. 3 or Fig. 4 and concerns the expedient for confirming the updated state of the redundant code contained in the received transmission information, every reception, so that only an on-vehicle side serving as a reception side is illustrated in Fig. 5. The point of difference from Fig. 3 or Fig. 4 is that a redundant code string based on redundant codes contained in transmission information items at a plurality of successive transmission timings is created, whereupon the created string is subjected to pattern matching with a redundant code table 15 which has been created beforehand. This method will be stated below.

Incidentally, although the case of transmitting information from a ground control equipment to an on-vehicle control equipment will be exemplified in the embodiment of Fig. 5, the same holds true also of the converse case. First, in the on-vehicle control equipment, the redundant code table as shown in Fig. 6 is created by the redundant-code generation means 11 (shown in Fig. 1) when processing is started. The table is such that table contents are prepared in correspondence with table Nos., and the table No. and the table content correspond respectively to the counter content and the redundant code indicated in Fig. 2.

The operation of this embodiment will be explained below. In sending control information to the on-vehicle control equipment, the ground control equipment affixes a communicating redundant code created by redundant-code generation means included in this ground control equipment, and a CRC code for the control information. Assuming now that the content of a counter included in the redundant-code generation means be "1", the communicating redundant code at that time is {00011} in view of Fig. 2. Accordingly, the constituting contents of the transmission information become as follows:

```
Transmission information = {Communication
information} + {00011} + {CRC code}
```

Thus, the on-vehicle control equipment first checks the presence or absence of the occurrence of any bit error in the received transmission information on the basis of the CRC code. Subsequently, it extracts the communicating redundant code and adds the extracted code to a redundant code string, thereby to update the redundant code string. Assuming that the contents of the redundant code string consist of communicating redundant codes correspondent to three times of transmission processing, the contents of the communicating redundant codes in the next transmission processing and the still next transmission processing enter the redundant code string. Since the contents of the communicating redundant codes at these times correspond to the content for a counter value "2" and the content for a counter value "3", they are {00101} and {01001}, respectively. Accordingly, the redundant code string becomes as follows:

```
Redundant code string = {00011} + {00101} +
{01001}.
```

This redundant code string is collated with the contents of the redundant code table shown in Fig. 6, thereby to check if an agreeing pattern exists. In this case, table contents corresponding to table Nos. {1}, {2} and {3} agree as the pattern, and it can therefore be confirmed that transmission information items corresponding to receiving redundant codes which are the contents of the redundant code string are ones updated correctly.

Here, let's consider a case where the ground transmitter/receiver has developed a trouble, and where the transmission information correspondent to the counter content "2" was transmitted to the on-vehicle control equipment at the timing for transmitting the transmission information correspondent to the counter content "3". On this occasion, the contents of the communicating redundant codes contained in the transmission information items received by the on-vehicle control equipment are {00011}, {00101} and {00101} in succession. Accordingly, the contents of the redundant code string become as follows:

```
Redundant code string = {00011} + {00101} +
{00101}
```

In the on-vehicle control equipment, the matching process based on the redundant code string is executed, thereby to check whether or not a pattern agreeing with the redundant code string exists in the redundant code table shown in Fig. 6. Herein, the agreeing pattern does not exist, and it can therefore be confirmed that the transmission information items are ones which have not been correctly updated at the respective transmission timings.

Although, in the foregoing, the embodiments of the present invention have been described as employing the track circuit transmission as transmission means, it is a matter of course that similar effects are attained even when the present invention is applied to a case of transmitting information by radio.

Industrial Applicability:

According to the present invention described above, a redundant code which is updated every transmission is affixed to transmission information in the consecutive transmission mode between an on-vehicle control equipment and a ground control equipment, and the affixed code is collated, whereby the trouble of a transmission path can be simply found, and the safety of a train service can be enhanced by controlling an automatic train control system or the like on the basis of the result of the collation. Accordingly, the present invention is suitable for applications in the field of a railway in which the greatest importance is attached to the safety.

**Claims**

1.  A railway information transmission method for transmitting information in a consecutive transmission mode between an on-vehicle control equipment (1) for a train running on a track and a ground control equipment (2) for controlling the running train as transmission and reception sites, the method comprising
    at the transmission side, updating a first redundant code by a predetermined procedure upon every transmission of information;
    affixing the first redundant code to the information to be transmitted, and
    transmitting the information containing the first redundant code, and,
    at the reception side, receiving the information containing the first redundant code,
    updating a second redundant code by the same predetermined procedure upon every reception of information, and
    collating the first redundant code contained in the received information with the second redundant code.

2.  A railway information transmission system for transmitting information in a consecutive transmission mode between a train running on a track and a ground control unit, the system comprising
    an on-vehicle control equipment (1) on the train,
    a ground control equipment (2), and
    a plurality of ground transmitters/receivers (41...4n) coupled to the ground control equipment (2) via a network (3);
    wherein each of the ground control equipment (2) and the on-vehicle control equipment (1) includes
    redundant-code generation means (11, 21) for updating a redundant code by a predetermined procedure upon every transmission and reception of information; and
    wherein at least one of the ground control equipment (2) and the on-vehicle control equipment (1), as a transmission side, includes
    means for affixing the redundant code updated at the transmission side to the information to be transmitted, and
    wherein at least the other one of the ground control equipment (2) and the on-vehicle control equipment (1), as a reception side, includes
    means for collating the redundant code updated at the transmission side and affixed to the information with a redundant code updated at the reception side.

3.  The system of claim 2, comprising means for reporting and transferring the collated result, when the collation of the redundant codes results in disagreement.

4.  The system of claim 2, comprising means for outputting a result of the collation as a signal and transferring the signal to means for coping with emergency of the train, if the collation of the redundant codes results in disagreement.

5.  The system of claim 2, comprising means for initializing the updating of the redundant codes in the redundant-code generation means (11, 21), when the train stops in compliance with a stop indication of a station, a signal apparatus, or the like.

6.  The system of claim 2, comprising means for commanding signal apparatuses installed within a control range of the ground control equipment, to present stop indications, in order to execute an initialization process for starting the updating of the redundant codes in the redundant-code generation means (11, 21).

7.  The system of claim 2, wherein each of the redundant codes generated by the redundant-code generation means (11, 21) contains part of a redundant code to be subsequently generated, as preannouncement information, and each of the ground control equipment (2) and the on-vehicle control equipment (1) includes means (13) for operating at the reception so as to retain, at least, the preannouncement information contained in the communicating redundant code received last and to collate the retained preannouncement information with a content of the communicating redundant code received anew.

**8.** The system of claim 2, wherein each of the redundant codes generated by said redundant-code generation means contains part of a redundant code generated last, as acknowledgement information, and each of the ground control equipment (2) and the on-vehicle control equipment (1) includes means (14) for operating at the reception so as to retain, at least, the acknowledgement information contained in the communicating redundant code received last and to collate the retained acknowledgement information with a content of the communicating redundant code received anew.

**9.** The system of claim 2, wherein each of the ground control equipment (2) and the on-vehicle control equipment (1) includes means for creating and retaining a collating redundant-code table (15) at a start of processing beforehand, the table (15) containing the redundant codes which are to be output by the redundant-code generation processes, and for collating a changing state of a reception information string based on the redundant codes which are contained in, at least, a plurality of reception information items, with the contents of the collating redundant-code table (15).

**10.** The system of claim 2, wherein the on-vehicle control equipment (1) includes means for accepting a collating redundant-code table (15) from said ground control equipment (2) and then retaining therein before a start of processing, the table (15) based on the redundant codes which are to be output by the redundant-code generation processes in the ground control equipment (2), and for collating a changing state of a reception information string based on the redundant codes which are contained in, at least, a plurality of reception information items, with the contents of the collating redundant-code table (15).

**Patentansprüche**

**1.** Schienen-Informationsübertragungsverfahren zum Übertragen von Informationen in einem konsekutiven Übertragungsmodus zwischen einer fahrzeugseitigen Steuereinrichtung (1) für einen auf einem Gleisstück fahrenden Zug und einer Basissteuereinrichtung (2) zum Steuern des fahrenden Zuges als Übertragungs- und Empfangsseiten, wobei das Verfahren umfasst:

auf der Übertragungsseite das Aufdatieren eines ersten redundanten Codes bei jeder Informationsübertragung mittels einer vorgegebenen Prozedur,
das Anhängen des ersten redundanten Codes an die zu übertragenden Informationen und
das Übertragen der den ersten redundanten Code enthaltenden Informationen; und
auf der Empfangsseite das Empfangen der den ersten redundanten Code enthaltenden Informationen,
das Aufdatieren eines zweiten redundanten Codes bei jedem Informationsempfang mittels derselben vorgegebenen Prozedur und
das Gegenüberstellen des in den empfangenen Informationen enthaltenen ersten redundanten Codes und des zweiten redundanten Codes.

**2.** Schienen-Informationsübertragungssystem zum Übertragen von Informationen in einem konsekutiven Übertragungsmodus zwischen einem auf einem Gleis fahrenden Zug und einer Basissteuereinheit, wobei das System umfasst:

eine fahrzeugseitige Steuereinrichtung (1) im Zug,
eine Basissteuereinrichtung (2) und
mehrere Basissender/-empfänger (41 ... 4n), die über ein Netzwerk (3) mit der Basissteuereinrichtung (2) verbunden sind;

wobei die Basissteuereinrichtung (2) und die fahrzeugseitige Steuereinrichtung (1) jeweils enthalten:

eine Einrichtung (11, 21) zur Erzeugung redundanten Codes zum Aufdatieren eines redundanten Codes bei jeder Übertragung und jedem Empfang von Informationen mittels einer vorgegebenen Prozedur und

wobei die Basissteuereinrichtung (2) und/oder die fahrzeugseitige Steuereinrichtung (1), als Übertragungsseite, enthalten:

eine Einrichtung zum Anhängen des auf der Übertragungsseite aufdatierten redundanten Codes an die zu übertragenden Informationen, und

wobei zumindest die jeweils andere der Basissteuereinrichtung (2) und der fahrzeugseitigen Steuereinrichtung (1), als Empfangsseite, enthält:

eine Einrichtung zum Gegenüberstellen des auf der Übertragungsseite aufdatierten und an die Informationen angehängten redundanten Codes und eines auf der Empfangsseite aufdatierten redundanten Codes.

3.  System nach Anspruch 2, umfassend eine Einrichtung zum Mitteilen und Übergeben des Gegenüberstellungsergebnisses, wenn die Gegenüberstellung der redundanten Codes zeigt, dass sie nicht übereinstimmen.

4.  System nach Anspruch 2, umfassend eine Einrichtung zum Ausgeben eines Ergebnisses der Gegenüberstellung als ein Signal und zum Übergeben des Signals an eine Einrichtung zur Bearbeitung eines Notfalls im Zug, falls die Gegenüberstellung der redundanten Codes zeigt, dass sie nicht übereinstimmen.

5.  System nach Anspruch 2, umfassend eine Einrichtung zum Initialisieren der Aufdatierung der redundanten Codes in der Einrichtung (11, 21) zur Erzeugung redundanter Codes, wenn der Zug auf eine Halteanweisung eines Bahnhofs, einer Signalvorrichtung oder ähnlichem anhält.

6.  System nach Anspruch 2, umfassend eine Einrichtung zum Erstellen von Anweisungen an innerhalb eines Steuerbereichs der Basissteuereinrichtung installierte Signalvorrichtungen dahingehend, dass sie Halteanweisungen ausgeben, um einen Initialisierungsvorgang zum Starten des Aufdatierens der redundanten Codes in der Einrichtung (11, 21) zur Erzeugung redundanter Codes auszuführen.

7.  System nach Anspruch 2, wobei jeder der redundanten Codes, die von der Einrichtung (11, 21) zur Erzeugung redundanter Codes erzeugt worden sind, einen Teil eines redundanten Codes, der darauf folgend zu erzeugen ist, als Vorankündigungsinformation enthält, und sowohl die Basissteuereinrichtung (2) als auch die fahrzeugseitige Steuereinrichtung (1) eine Einrichtung umfassen, die beim Empfang darauf hinwirkt, mindestens die Vorankündigungsinformation, die in dem zuletzt empfangenen kommunizierten redundanten Code enthalten ist, zurückzuhalten und die zurückgehaltene Vorankündigungsinformation dem Inhalt des neu empfangenen kommunizierten redundanten Codes gegenüberzustellen.

8.  System nach Anspruch 2, wobei jeder der redundanten Codes, die von der Einrichtung zur Erzeugung redundanter Codes erzeugt worden sind, einen Teil eines zuletzt erzeugten redundanten Codes als Bestätigungsinformation enthält und sowohl die Basissteuereinrichtung (2) als auch die fahrzeugseitige Steuereinrichtung (1) eine Einrichtung umfassen, die beim Empfang darauf hinwirkt, dass mindestens die im zuletzt empfangenen kommunizierten redundanten Code enthaltene Bestätigungsinformation zurückgehalten wird und die zurückgehaltene Bestätigungsinformation dem Inhalt des neu empfangenen kommunizierten redundanten Codes gegenübergestellt wird.

9.  System nach Anspruch 2, wobei sowohl die Basissteuereinrichtung (2) als auch die fahrzeugseitige Steuereinrichtung (1) eine Einrichtung zum Erstellen und Aufbewahren einer Gegenüberstellungstabelle (15) für redundanten Code im Voraus bei Beginn der Verarbeitung enthalten, wobei die Tabelle (15) die redundanten Codes enthält, die von den Erzeugungsvorgängen für redundanten Code auszugeben sind, und wobei die Einrichtung dazu ausgelegt ist, einen Änderungszustand einer Empfangsinformationszeichenkette auf der Grundlage der redundanten Codes, die zumindest in mehreren Empfangsinformationsgegenständen enthalten sind, den Inhalten der Gegenüberstellungstabelle (15) für redundanten Code gegenüberzustellen.

10. System nach Anspruch 2, wobei die fahrzeugseitige Steuereinrichtung (1) eine Einrichtung zum Annehmen einer Gegenüberstellungstabelle (15) für redundanten Code von der Basissteuereinrichtung (2) und zum Aufbewahren von dieser vor dem Beginn der Verarbeitung umfasst, wobei die Tabelle (15) auf den redundanten Codes beruht, die von den Erzeugungsvorgängen für redundanten Code in der Basissteuereinrichtung (2) auszugeben sind, und wobei die Einrichtung dazu ausgelegt ist, einen Änderungszustand einer Empfangsinformationszeichenkette auf der Grundlage der redundanten Codes, die zumindest in mehreren Empfangsinformationsgegenständen enthalten sind, den Inhalten der Gegenüberstellungstabelle (15) für redundanten Code gegenüberzustellen.

**Revendications**

1. Procédé de transmission d'informations de voie ferrée pour transmettre des informations dans un mode de transmission consécutive entre un équipement de commande embarqué à bord d'un véhicule (1) pour un train circulant sur une voie et un équipement de commande au sol (2) pour commander le train circulant en tant que sites de transmission et de réception, le procédé comportant les étapes consistant à
   au niveau du côté de transmission, mettre à jour un premier code redondant par l'intermédiaire d'un processus prédéterminé lors de chaque transmission d'informations,
   affecter le premier code redondant aux informations à transmettre, et
   transmettre les informations contenant le premier code redondant, et
   au niveau du côté de réception, recevoir les informations contenant le premier code redondant,
   mettre à jour un second code redondant par l'intermédiaire du même processus prédéterminé lors de chaque réception d'informations, et
   fusionner le premier code redondant contenu dans les informations reçues avec le second code redondant.

2. Système de transmission d'informations de voie ferrée pour transmettre des informations dans un mode de transmission consécutive entre un train circulant sur une voie et une unité de commande au sol, le système comportant
   un équipement de commande embarqué à bord d'un véhicule (1) sur le train,
   un équipement de commande au sol (2), et
   une pluralité d'émetteurs/récepteurs au sol (41...4n) couplés à l'équipement de commande au sol (2) via un réseau (3),
   dans lequel chacun de l'équipement de commande au sol (2) et de l'équipement de commande embarqué à bord d'un véhicule (1) inclut
   des moyens de génération de code redondant (11,21) pour mettre à jour un code redondant par l'intermédiaire d'un processus prédéterminé lors de chaque transmission et réception d'informations, et
   dans lequel au moins l'un de l'équipement de commande au sol (2) et de l'équipement de commande embarqué à bord d'un véhicule (1), en tant que côté de transmission inclut
   des moyens pour affecter le code redondant mis à jour au niveau du côté de transmission aux informations à transmettre, et
   dans lequel au moins l'autre parmi l'équipement de commande au sol (2) et l'équipement de commande embarqué à bord d'un véhicule (1), en tant que côté de réception, inclut
   des moyens pour fusionner le code redondant mis à jour au niveau du côté de transmission et affecté aux informations avec un code redondant mis à jour au niveau du côté de réception.

3. Système selon la revendication 2, comportant des moyens pour rapporter et transférer le résultat fusionné lorsque la fusion des codes redondants aboutit en résultat à un désaccord.

4. Système selon la revendication 2, comportant des moyens pour délivrer en sortie un résultat de la fusion sous forme d'un signal et transférer le signal à des moyens pour faire face à une situation d'urgence du train, si la fusion des codes redondants aboutit en résultat à un désaccord.

5. Système selon la revendication 2, comportant des moyens pour initialiser la mise à jour des codes redondants dans les moyens de génération de code redondant (11,21) lorsque le train s'arrête en conformité avec une indication d'arrêt d'une gare, d'un dispositif de signal, ou analogue.

6. Système selon la revendication 2, comportant des moyens pour contrôler des dispositifs de signaux installés dans une plage de commande de l'équipement de commande au sol, pour présenter des indications d'arrêt, afin d'exécuter un processus d'initialisation pour lancer la mise à jour des codes redondants dans les moyens de génération de code redondant (11,21).

7. Système selon la revendication 2, dans lequel chacun des codes redondants générés par les moyens de génération de code redondant (11,21) contient une partie d'un code redondant à générer par la suite, en tant qu'informations de préannonce, et chacun de l'équipement de commande au sol (2) et de l'équipement de commande embarqué à bord d'un véhicule (1) inclut des moyens (13) pour fonctionner au niveau de la réception de manière à conserver, au moins, les informations de préannonce contenues dans le code redondant communiqué reçu en dernier et à fusionner les informations de préannonce conservées avec un contenu du code redondant communiqué reçu à nouveau.

8. Système selon la revendication 2, dans lequel chacun des codes redondants générés par lesdits moyens de génération de code redondant contient une partie d'un code redondant généré en dernier, en tant qu'informations d'acquittement, et chacun de l'équipement de commande au sol (2) et de l'équipement de commande embarqué à bord d'un véhicule (1) inclut des moyens (14) pour fonctionner au niveau de la réception de manière à conserver, au moins, les informations d'équipement contenues dans le code redondant communiqué reçu en dernier et à fusionner les informations d'acquittement conservées avec un contenu du code redondant communiqué reçu à nouveau.

9. Système selon la revendication 2, dans lequel chacun de l'équipement de commande au sol (2) et de l'équipement de commande embarqué à bord d'un véhicule (1) inclut des moyens pour créer et conserver un tableau de codes redondants fusionnés (15) au début d'un traitement préalable, le tableau (15) contenant les codes redondants qui doivent être délivrés en sortie par les processus de génération de codes redondants, et pour fusionner un état de changement d'une chaîne d'informations de réception basée sur les codes redondants qui sont contenus dans, au moins, une pluralité d'éléments d'informations de réception, avec le contenu du tableau de codes redondants fusionnés (15).

10. Système selon la revendication 2, dans lequel l'équipement de commande embarqué à bord d'un véhicule (1) inclut des moyens pour accepter un tableau de codes redondants fusionnés (15) en provenance dudit équipement de commande au sol (2) et conserver ensuite celui-ci avant le lancement d'un traitement, le tableau (15) étant basé sur les codes redondants qui doivent être délivrés en sortie par les processus de génération de codes redondants dans l'équipement de commande au sol (2), et pour fusionner un état de changement d'une chaîne d'informations de réception basée sur les codes redondants qui sont contenus dans, au moins, une pluralité d'éléments d'informations de réception, avec le contenu du tableau de codes redondants fusionnés (15).

## FIG.1

1 ON-VEHICLE CONTROL EQUIPMENT

5
SPEED DETECTOR

REDUNDANT-CODE GENERATION MEANS 11

REDUNDANT CODE FOR RECEPTION

12 CODE-COLLATION PROCESS MEANS

6

TRAIN

7
BRAKE CONTROLLER

TRANSMISSION INFORMATION

TRACK

TRACK CIRCUIT TRANSMISSION

41
GROUND TRANSMITTER  · · · ·  GROUND RECEIVER  4n

3 NETWORK

NETWORK TRANSMISSION

2 GROUND CONTROL EQUIPMENT

TRANSMISSION INFORMATION  22

REDUNDANT CODE FOR COMMUNICATION

COMMUNICATION INFORMATION

REDUNDANT-CODE GENERATION MEANS  21

## FIG.2

| PROCESSING NUMBER OF TIMES | COUNTER CONTENT | REDUNDANT CODE |
|:---:|:---:|:---:|
| 1 | 0 | 00110 |
| 2 | 1 | 00011 |
| 3 | 2 | 00101 |
| 4 | 3 | 01001 |
| 5 | 4 | 01010 |
| 6 | 5 | 01100 |
| 7 | 6 | 10001 |
| 8 | 7 | 10010 |
| 9 | 8 | 10100 |
| 10 | 9 | 11000 |
| 11 | 0 | 00110 |
| 12 | 1 | 00011 |
| 13 | 2 | 00101 |
| 14 | 3 | 01001 |
| 15 | 4 | 01010 |
| 16 | 5 | 01100 |
| ⋮ | ⋮ | ⋮ |

# FIG.3

1 ON-VEHICLE CONTROL EQUIPMENT

TRAIN

PATTERN MATCHING PROCESS

6

13 PREANNOUNCEMENT-
INFORMATION
RETENTION MEANS

7

BRAKE
CONTROLLER

TRANSMISSION
INFORMATION

TRACK

TRACK CIRCUIT TRANSMISSION

GROUND TRANSMITTER 41 · · · · GROUND RECEIVER 4n

3 NETWORK

NETWORK TRANSMISSION

2 GROUND CONTROL EQUIPMENT

TRANSMISSION
INFORMATION 22

REDUNDANT
CODE FOR
COMMUNICATION

COMMUNICATION
INFORMATION

PREANNOUNCEMENT
INFORMATION

REDUNDANT-CODE 21
GENERATION MEANS

## FIG.4

1 ON-VEHICLE CONTROL EQUIPMENT

PATTERN MATCHING PROCESS

14 ACKNOWLEDGEMENT-INFORMATION RETENTION MEANS

TRAIN

6

7

BRAKE CONTROLLER

TRANSMISSION INFORMATION

TRACK

TRACK CIRCUIT TRANSMISSION

41

GROUND TRANSMITTER

GROUND RECEIVER

4n

3 NETWORK

NETWORK TRANSMISSION

2 GROUND CONTROL EQUIPMENT

TRANSMISSION INFORMATION

22

REDUNDANT CODE FOR COMMUNICATION

COMMUNICATION INFORMATION

ACKNOWLEDGMENT INFORMATION

REDUNDANT-CODE GENERATION MEANS

21

# FIG.5

# FIG.6

| TABLE NO. | TABLE CONTENT |
|-----------|---------------|
| 0 | 00110 |
| 1 | 00011 |
| 2 | 00101 |
| 3 | 01001 |
| 4 | 01010 |
| 5 | 01100 |
| 6 | 10001 |
| 7 | 10010 |
| 8 | 10100 |
| 9 | 11000 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3128760 A
- JP 5064264 A
- JP 13647251988 A
- JP 2042837 A
- JP 59083429 A